# EUROPÄISCHE PATENTANMELDUNG

(11) **EP 2 570 991 A2**
(43) Veröffentlichungstag der Anmeldung: **20.03.2013**
(21) Anmeldenummer: 12004941.6
(22) Anmeldetag: 04.07.2012
(51) Int. Cl.: G06T 7/20, H04N 7/26

(54) **Verfahren zur Bildverarbeitung von mit einem optischen Sensor in einem Kraftfahrzeug aufgenommenen Bilddaten und Kraftfahrzeug**

(30) Priorität: 13.09.2011 DE 102011113265
(71) Anmelder: AUDI AG, 85045 Ingolstadt (DE)
(72) Erfinder: Wender, Stefan, 85055 Ingolstadt (DE); Mählisch, Mirko, 85080 Gaimersheim (DE); Kleinsorge, Alexander, 10247 Berlin (DE)
(74) Vertreter: Thielmann, Frank

(57) **Zusammenfassung**

Verfahren zur Bildverarbeitung von mit einem optischen Sensor, insbesondere einer Kamera, in einem Kraftfahrzeug aufgenommenen Bilddaten, welche mit einer bestimmten Bildaufnahmerate hintereinander aufgenommene Bilder umfassen, wobei aus den Bilddaten ein optischer Fluss und aus dem optischen Fluss durch wenigstens ein Fahrzeugsystem, insbesondere ein Fahrerassistenzsystem, nutzbare Informationen ermittelt werden, wobei der optische Fluss während einer Kompression der Bilddaten und/oder aus während der Kompression der Bilddaten gewonnenen Flussinformationen ermittelt wird.

## Beschreibung

Die Erfindung betrifft ein Verfahren zur Bildverarbeitung von mit einem optischen Sensor, insbesondere einer Kamera, in einem Kraftfahrzeug aufgenommenen Bilddaten, welche mit einer bestimmten Bildaufnahmerate hintereinander aufgenommene Bilder umfassen, wobei aus den Bilddaten ein optischer Fluss und aus dem optischen Fluss durch wenigstens ein Fahrzeugsystem, insbesondere ein Fahrerassistenzsystem, nutzbare Informationen ermittelt werden. Daneben betrifft die Erfindung ein Kraftfahrzeug.

In Kraftfahrzeugen ist es bekannt, Kameras vorzusehen, die kontinuierlich die Umgebung eines Kraftfahrzeugs überwachen. Hierzu nimmt die Kamera mit einer bestimmten Bildrate Bilder auf. Diese können über entsprechende Steuergeräte im Kraftfahrzeug ausgewertet werden, um durch Fahrerassistenzsysteme und sonstige Fahrzeugsysteme benötigte Informationen zu bestimmen, beispielsweise in Form eines Umfeldmodells und dergleichen.

Ein wesentlicher Teil der heutigen Bildverarbeitung für Fahrzeugsysteme, insbesondere Fahrerassistenzsysteme, ist die Bestimmung des optischen Flusses. Der optische Fluss ist ein Vektorfeld, das letztlich angibt, in welche Richtung und mit welcher Geschwindigkeit sich ein Unterbereich eines Bildes, also beispielsweise ein Bildpunkt (Pixel) oder mehrere Pixel, bewegt. Der optische Fluss wird beispielsweise verwendet, um bewegte von nicht bewegten Objekten zu trennen und dergleichen. Problematisch in der Ermittlung des optischen Flusses ist, dass dessen Ermittlung eine größere Ressourcenmenge benötigt, mithin sehr aufwendig ist. Es muss eine große Rechenkapazität bereitgestellt werden, die ein wesentlicher Bestandteil von Hardwarekosten der Systeme in einem Kraftfahrzeug ist.

Vorgeschlagen wurde bereits, die Bildverarbeitung in einem Kraftfahrzeug zentral durchzuführen, so dass die Bilddaten, insbesondere über eine dedizierte Kommunikationsverbindung, von der Kamera mit einer hohen Übertragungsbandbreite an ein insbesondere zentrales Steuergerät übertragen werden müssen.

Der Erfindung liegt die Aufgabe zugrunde, eine weniger aufwendig zu realisierende und kostengünstigere Möglichkeit zur Bildverarbeitung in Kraftfahrzeugen anzugeben.

Zur Lösung dieser Aufgabe ist bei einem Verfahren der eingangs genannten Art erfindungsgemäß vorgesehen, dass der optische Fluss während einer Kompression der Bilddaten und/oder aus während der Kompression der Bilddaten gewonnenen Flussinformationen ermittelt wird.

Der Erfindung liegt mithin die Erkenntnis zugrunde, dass im Rahmen einer Komprimierung von Bilddaten ohnehin ein optischer Fluss oder zumindest dessen Grundlage ermittelt wird. Während erste Kompressionsverfahren für mit einer bestimmten Bildaufnahmerate hintereinander aufgenommene Bilddaten sich darauf beschränken, grob anzugeben, wo eine Änderung in aufeinanderfolgenden Bildern auftritt, basieren neuere Verfahren auch darauf, anzugeben, was die Richtung und Geschwindigkeit der Änderung ist, mithin einen optischen Fluss in Form eines Bewegungsvektorfeldes praktisch als "Abfallprodukt" zu erzeugen. Die Komprimierung "clustert" die Bilder letztlich in Bildbereiche, wobei die Größe der Bildbereiche letztlich davon abhängt, wie viel beziehungsweise wenig Verlust man in Kauf nehmen muss. Entsprechend detailgenau oder grob ist letztlich auch ein optischer Fluss als Bewegungsvektorfeld im Strom der komprimierten Bilddaten enthalten, wobei diese Informationen üblicherweise nach der Dekodierung der Bilddaten wieder verworfen wurden.

Die vorliegende Erfindung schlägt nun vor, diese ebenfalls mit auszulesen. Ist das im Rahmen der Komprimierung ermittelte Bewegungsvektorfeld bereits genau genug, kann es unmittelbar als optischer Fluss verwendet werden. Es kann jedoch im Rahmen der vorliegenden Erfindung auch vorgesehen sein, die Flussinformation als Eingangsdaten zur Initialisierung eines Berechnungsverfahrens für den optischen Fluss zu verwenden. Das bedeutet, die aus dem Kompressionsverfahren extrahierten Flussinformationen können für eine Initialisierung detaillierter Flussberechnungsverfahren als Vorverarbeitung verwendet werden. Hierdurch ist es möglich, dass sich auch sehr detaillierte Flussberechnungsverfahren realisieren lassen und dennoch Rechenzeit in den ersten Schritten solcher Algorithmen eingespart werden kann.

Es ist grundsätzlich denkbar, die Kompression der Bilddaten allein für den Zweck der Ermittlung des optischen Flusses zu verwenden. Beispielsweise kann also ein speziell zur effektiven Durchführung der Komprimierung ausgebildeter Mikrochip in dem Steuergerät, das die Bilddaten auswertet, verbaut werden. Die Verwendung derartiger dedizierter Chips, die spezielle Befehlssätze zur effektiveren Durchführung der zur Ermittlung des optischen Flusses benötigten Rechenschritte aufweisen, ist für sich schon sinnvoll, nachdem solche "Kompressionschips" im Handel bereits erhältlich sind und durch ihre, hier einem neuen Zweck dienende, Verwendung die Anforderungen an die Prozessorhardware der restlichen Bildverarbeitung reduziert werden können. So ist es möglich, hier weniger leistungsfähige, günstigere Prozessorhardware einzusetzen, während gleichzeitig durch die effektive Berechnung auch Rechenzeit und Energieverbrauch eingespart werden kann.

Besonders vorteilhaft und im Rahmen der vorliegenden Erfindung bevorzugt ist es jedoch, wenn bei einer Übertragung der Bilddaten über eine Übertragungsstrecke die Komprimierung vor der Übertragung über die Übertragungsstrecke erfolgt. Die Übertragung der Bilddaten erfordert eine hohe Übertragungsbandbreite, wie bereits erwähnt, die heutzutage häufig mit teuren Übertragungsmedien, mithin aufwendigen Kommunikationsverbindungen, realisiert wird. Hier kann jedoch auch eine geeignete Komprimierung der Bilddaten verwendet werden, so dass diese im Rahmen der vorliegenden Erfindung mithin letztlich "doppelt" verwendet wird, nämlich einmal zur günstigeren Übertragung der Bilddaten, zum anderen aber auch im Rahmen der Ermittlung des optischen Flusses. Es werden also im Rahmen der Erfindung Synergieeffekte aus Zwischenergebnissen der Bildkompression für die Bildverarbeitung in Fahrerassistenzsystemen weiter verwertet. Hierzu kann konkret vorgesehen sein, dass nach der Übertragungsstrecke die komprimierten Bilddaten und die aufgrund der Kompression mit übermittelten Bewegungsvektoren ausgelesen werden. Zusätzlich zu dem dekodierten Bild wird aus dem übertragenen Datenstrom also auch das Bewegungsvektorfeld des Komprimierungsverfahrens ausgelesen. Den dadurch extrahierten optischen Fluss kann man zum einen direkt an Stelle der bisher explizit für die Bildverarbeitung berechneten Bewegungsvektoren verwenden oder auch an Stelle ähnlicher Ansätze, die auf der Erkennung einer Verschiebung von Bildinhalten beruhen, für diverse Funktionen verwenden. Mithin wird signifikant die benötigte Rechenzeit reduziert, was, wie bereits erwähnt, den Einsatz günstigerer Prozessoren und Baugruppen ermöglicht, wodurch sich zusätzlich die Energiebilanz und das Gewicht der gesamten Bildverarbeitungseinrichtung positiv verändern.

In der Summe ergeben sich durch die vorliegende Erfindung also Vorteile durch die Steigerung der Energieeffizienz und die Reduktion des Gewichtes, sowie zusätzlich durch die Reduktion der Anschaffungskosten der einzelnen Komponenten der Bildverarbeitungseinrichtung.

Vorzugsweise wird zur Komprimierung ein speziell zur effektiven Durchführung der Komprimierung ausgebildeter Mikrochip verwendet. Wie bereits erwähnt, umfassen solche heutzutage bereits grundsätzlich bekannte Chips spezielle Befehlssätze zur effektiven Durchführung der Komprimierung.

Vorteilhafterweise kann als Komprimierungsverfahren das H264-Verfahren oder ein MJPEG-Verfahren verwendet werden. Bevorzugt wird das H264-Verfahren verwendet. Jedoch werden auch beim MJPEG (Motion JPEG) Bewegungsvektorfelder ermittelt.

Neben dem Verfahren betrifft die vorliegende Erfindung auch ein Kraftfahrzeug, umfassend einen optischen Sensor, insbesondere eine Kamera, und eine Einrichtung zur Bildverarbeitung von mit der Kamera aufgenommenen Bilddaten, die zur Durchführung des erfindungsgemäßen Verfahrens ausgebildet ist. Sämtliche Ausführungen bezüglich des erfindungsgemäßen Verfahrens lassen sich analog auf das erfindungsgemäße Kraftfahrzeug übertragen, mit welchem mithin die selben Vorteile erreicht werden können. Insbesondere umfasst die Einrichtung zur Bildverarbeitung einen speziell zur effektiven Durchführung der Komprimierung ausgebildeten Mikrochip ("Kompressionschip").

Besondere Vorteile lassen sich erzielen, wenn der Kamera nachgeschaltet ein Chip zur Komprimierung der Bilddaten und eine Übertragungsstrecke zur Übertragung der komprimierten Bilddaten an ein die weitere Bildverarbeitung vornehmendes Steuergerät vorgesehen sind. Dann ergeben sich besondere Synergieeffekte, indem das Komprimierungsverfahren sowohl zur günstigeren Übertragung der Bilddaten wie auch zur Ermittlung des optischen Flusses genutzt wird. Als Übertragungsstrecke kann beispielsweise eine dedizierte Leitung vorgesehen werden, vorteilhaft ist es zudem, wenn das Steuergerät ein zentrales Steuergerät für die Bildverarbeitung ist, welches dann die ermittelten Informationen an die weiteren Fahrzeugsysteme, insbesondere über einen Bus, verteilt.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine Prinzipskizze eines erfindungsgemäßen Kraftfahrzeugs, und
- Fig. 2: eine Prinzipskizze des erfindungsgemäßen Verfahrens.

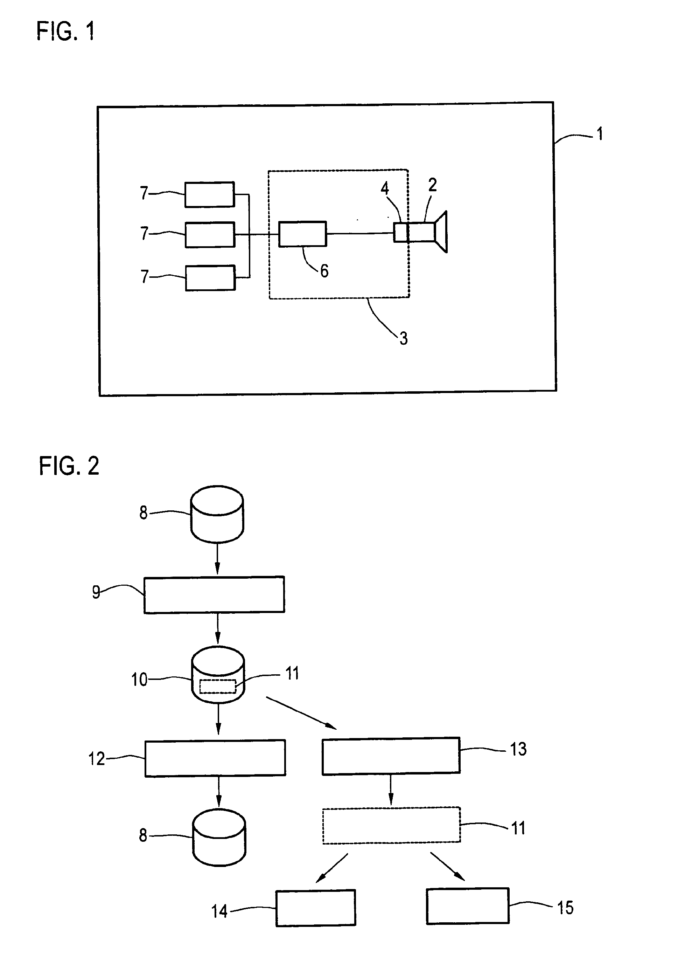

Fig. 1 zeigt eine Prinzipskizze eines erfindungsgemäßen Kraftfahrzeugs 1. Dieses weist wenigstens eine Kamera 2 auf, die mit einer bestimmten Bildaufnahmerate Bilder der Umgebung des Kraftfahrzeugs 1 aufnimmt, welche dann durch eine Bildverarbeitungseinrichtung 3 zur Bildverarbeitung der mit der Kamera 2 aufgenommenen Bilddaten weiterverarbeitet werden. Die Bildverarbeitungseinrichtung 3 umfasst zunächst der Kamera 2 in Transportrichtung der Bilddaten nachgeschaltet einen Chip 4 zur Komprimierung der Bilddaten nach dem H264-Verfahren. Die so komprimierten Bilddaten werden über eine Übertragungsstrecke 5, hier eine dedizierte Leitung, an ein Steuergerät 6 zur weiteren Bildverarbeitung weitergeleitet. Dort werden aus den Bilddaten für weitere Fahrzeugsysteme 7, insbesondere für Fahrerassistenzsysteme, nutzbare Informationen ermittelt, wie dies im Stand der Technik grundsätzlich bekannt ist.

Die Bildverarbeitungseinrichtung 3 ist nun zur Durchführung des erfindungsgemäßen Verfahrens ausgebildet, welches im Hinblick auf Fig. 2 näher erläutert werden soll. Zunächst werden die Bilddaten 8 der Kamera 2 in einem Schritt 9 nach dem H264-Verfahren in dem Chip 4 komprimiert. Folglich liegen dann komprimierte Bilddaten 10 vor, die auch ein Bewegungsvektorfeld 11 umfassen, welches angibt, wohin und wie schnell sich die betrachteten Bildbereiche bewegen.

Die komprimierten Bilddaten 10 werden über die Übertragungsstrecke 5 transportiert, wo sie zum einen wie üblich in einem Schritt 12 dekodiert werden, so dass wiederum die Bilddaten 8 erhalten werden, gegebenenfalls - abhängig von der Genauigkeit des Komprimierungsverfahrens - mit geringen Verlusten, jedoch wird zusätzlich in einem Schritt 13 das Bewegungsvektorfeld 11 aus den komprimierten Bilddaten 10 extrahiert und weiterverwertet, wofür es zwei Möglichkeiten gibt. Zum einen, wenn das Bewegungsvektorfeld 11 hinreichend genau ist, beispielsweise kleine Bildbereiche im Komprimierungsverfahren betrachtet werden, kann es unmittelbar als optischer Fluss in wenigstens einem Teil der diesen benötigenden Funktionen und Fahrzeugsysteme 7 verwendet werden, Schritt 14. Denkbar ist es aber auch, das Bewegungsvektorfeld 11 als Flussinformationen zu nutzen, um ein genaueres Berechnungsverfahren für den optischen Fluss zu Initialisieren, Schritt 15.

Mithin findet das Komprimierungsverfahren in Schritt 9 doppelten Nutzen, nämlich einmal zur Übertragung der Bilddaten, zum anderen zur Ermittlung des optischen Flusses oder zumindest als Vorverarbeitungsschritt zur Ermittiung des optischen Flusses.

## Patentansprüche

1. Verfahren zur Bildverarbeitung von mit einem optischen Sensor, insbesondere einer Kamera, in einem Kraftfahrzeug aufgenommenen Bilddaten, welche mit einer bestimmten Bildaufnahmerate hintereinander aufgenommene Bilder umfassen, wobei aus den Bilddaten ein optischer Fluss und aus dem optischen Fluss durch wenigstens ein Fahrzeugsystem, insbesondere ein Fahrerassistenzsystem, nutzbare Informationen ermittelt werden,
**dadurch gekennzeichnet,**
**dass** der optische Fluss während einer Kompression der Bilddaten und/oder aus während der Kompression der Bilddaten gewonnenen Flussinformationen ermittelt wird.

2. Verfahren nach Anspruch 1, **dadurch gekennzeichnet, dass** die Flussinformationen als Eingangsdaten zur Initialisierung eines Berechnungsverfahrens für den optischen Fluss verwendet werden.

3. Verfahren nach Anspruch 1 oder 2, **dadurch gekennzeichnet, dass** bei einer Übertragung der Bilddaten über eine Übertragungsstrecke die Komprimierung vor der Übertragung über die Übertragungsstrecke erfolgt.

4. Verfahren nach Anspruch 3, **dadurch gekennzeichnet, dass** nach der Übertragungsstrecke die komprimierten Bilddaten und die aufgrund der Kompression mit übermittelten Bewegungsvektoren ausgelesen werden.

5. Verfahren nach einem der vorangehenden Ansprüche, **dadurch gekennzeichnet, dass** zur Komprimierung ein speziell zur effektiven Durchführung der Komprimierung ausgebildeter Mikrochip verwendet wird.

6. Verfahren nach einem der vorangehenden Ansprüche, **dadurch gekennzeichnet, dass** als Komprimierungsverfahren das H264-Verfahren oder ein MJPEG-Verfahren verwendet werden.

7. Kraftfahrzeug, umfassend einen optischen Sensor, insbesondere eine Kamera, und eine Einrichtung zur Bildverarbeitung von mit der Kamera aufgenommenen Bilddaten, die zur Durchführung eines Verfahrens nach einem der vorangehenden Ansprüche ausgebildet ist.

8. Kraftfahrzeug nach Anspruch 7, **dadurch gekennzeichnet, dass** der Kamera nachgeschaltet ein Chip zur Komprimierung der Bilddaten und eine Übertragungsstrecke zur Übertragung der komprimierten Bilddaten an ein die weitere Bildverarbeitung vornehmendes Steuergerät vorgesehen sind.
